# EUROPEAN PATENT APPLICATION

(11) **EP 1 443 700 A2**
(43) Date of publication of application: **04.08.2004**
(21) Application number: 03300119.9
(22) Date of filing: 18.09.2003
(51) Int. Cl.: H04L 12/00

(54) **Methods and apparatus for configuration change management in communications networks**

(30) Priority: 19.09.2002 CA 2404191; 09.06.2003 US 456489
(71) Applicant: Alcatel Canada Inc., Kanata, Ontario K2K 2E6 (CA)
(72) Inventor: Bolder, Ron Scott, Nepean, Ontario K2J 4C7 (CA); Nijemcevic, Sasa, Nepean, Ontario K2J 1H9 (CA); Timmerman, Craig Ellirt, Ottawa, Ontario K1Y 1J3 (CA)
(74) Representative: Feray, Valérie

(57) **Abstract**

A configuration change management system is provided. The configuration change management system includes a configuration information repository and a human-machine interface for interacting with field-installed communications network entities. Versions of communications network entity specific configuration information are stored in repository entries. Methods of managing configuration changes include: retrieving configuration information from communications network entities; storing thereof under version control in repository entries; comparing at least one retrieved repository entry from the repository; and configuration information retrieved from field-installed communication network entities; and submitting, for reconfiguration, of at least one field installed communication network entity, selected configuration information held in a corresponding repository entry. Advantages are derived from: a centralized tracking and storage of configuration information under version control, and the ability to compare versions of communications network entity configurations, reducing equipment downtime and reducing communications network management overheads. Further advantages are derived from an efficient method of debugging communications network entity configuration problems. The methods and system further enable easy migration of communications network entities to newer software/firmware releases, and fast provisioning of replacement communications network equipment.

## Description

The invention relates to communication network management, and in particular to methods and apparatus for managing configuration changes.

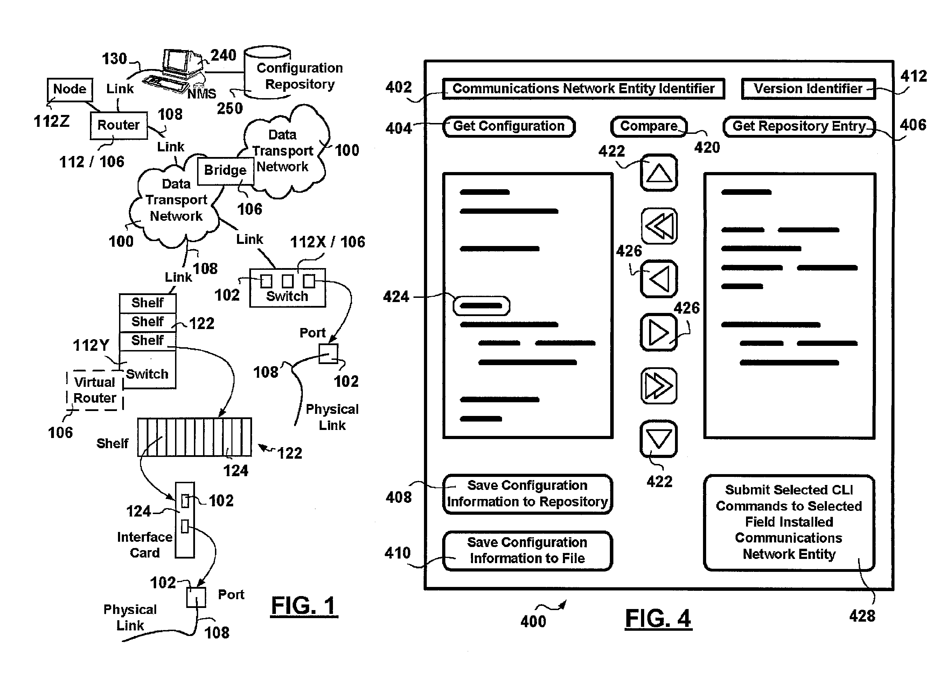

With regards to communication network equipment, for example data switching nodes schematically shown in FIG. 1, a communications equipment vendor may chose to implement an integral communication network node device 122X having a data switching processor operable to switch data packets between a group of ports 102, while another communication equipment vendor may chose a customizable implementation of a switching node 112Y including: a switching fabric, an equipment rack divided into shelves 122, each shelf 122 having slot connectors for connection with interface cards 124, each interface card 124 having at least one port 102. Physical transport links 108 are connected between ports 102.

Although conceptually the two switching nodes 112X and 112Y provide a similar switching function, each communications equipment implementation is adapted for a different operational environment: the former switching node, 112X, is more adapted for enterprise solutions as a private communication network node, perhaps further adapted to be connected to carrier communication networks 100; while the latter switching node, 112Y, is better adapted for high data throughput in the core of public communication networks 100. Typically the former, 112X, implements a small number of data transport protocols while for the latter, 112Y, data transport protocols are implemented on interface cards 124 and/or ports 102 - providing for a flexible/configurable deployment thereof. Communications network nodes 112 which are data switching nodes (122X/122Y) may also provide routing of the traffic conveyed. The integral switching node 112X, as mentioned above, is operable as a routing device 106, while the switching node 112Y may have at least one virtual router 106 associated therewith. Other data network nodes 112Z may be distinct from an associated router 106. The latter configuration is typically found in customer owned Local Area Network (LAN) segments.

It is understood that the interconnected physical communications network equipment alluded to above is part of a larger body of managed communications network entities enabling the provision of communications services. The data network entities in the realm of management of a network management solution also include, but are not limited to: logical ports, logical interfaces, link trunks etc.

Connectivity information, configuration information, service support information, etc. regardless of its origin is held by communications network entities. Suffice it to say that, the modification of: the connectivity information, configuration information, service support information, etc. is performed to optimize the operation of a communications network; and incorrect modifications thereof leads to communications network failures.

The connectivity information, configuration information, service support information, etc. is provided to communications network entities using element management techniques and tools, typically including the use of Command Line Interface (CLI) commands. A command line interface is a command-driven text-based user interface to a communications network entity.

Different vendor equipment uses a different CLI command set, typically vendor specific, which makes it difficult for an operator to obtain and manipulate configuration information in a typical multi-vendor communications network deployment.

Configuration changes are also made using scripts of CLI commands, as it is very common for configuration changes to be made manually by entering the CLI commands via a console. Script-based and manual entry of CLI commands to change communications network entity configuration make it difficult to keep track of configuration changes, as the reasons of each configuration change and the reasons for the particular sequence of configuration changes made are only known to, if remembered by, a network analyst.

The configuration of a communications network entity tends to change over time, for example due to software upgrades, firmware upgrades, hardware upgrades, new service/capacity provisioning, etc. It is often useful to track the changes made to the configuration of a communications network entity in case there is a need to return to a particular configuration, for example to mitigate a problem caused by a configuration change.

In the prior art it is known to perform "baselining" of a router's configuration whereby a record is kept of the router's initial configuration. The initial configuration is then used as a template to which further changes are made. The Wide Area Network Design Laboratory (WANDL) Inc. provides a tool known as the Internet Protocol Analysis Tool (IPAT) for performing baselining on Cisco Systems routers. IPAT makes use of "configlets", which are router configuration scripts, to make configuration changes to a router.

It is also known in the prior art to store CLI command configuration scripts run on a router to effect repeated configuration changes thereto. Prior practice includes naming CLI command configuration scripts with descriptions specifying what changes are being implemented.

Communications network entities usually have at least one vendor specific CLI command or a specific CLI command sequence providing for retrieval of configuration information therefrom. This configuration information may be retrieved in the form of a file. However, ways to manage these retrieved files are not known in the prior art.

Although descriptively naming "configlets" and CLI command configuration scripts, of the prior art, provides limited tracking of configuration changes made to a communications network entity, no tracking of the manual configuration changes made is provided. Therefore, simply knowing what changes were made to a communications network entity is not sufficient in tracking communications network entity configuration as, for example, the sequence in which the configuration changes were made is important. The result is: an increased overhead in managing communications networks, an over reliance of highly trained network analysts, misuse of the capabilities of highly trained network analysts in fixing misconfigured equipment, etc.

Therefore, one object of the present invention is to address the above mentioned issues in providing a configuration change management system reducing network management operational overheads.

More precisely, the present invention provides Configuration management system comprising:
- means for receiving configuration information from at least one communications network entity;
- a configuration repository for storing version controlled snapshots of configuration information in configuration repository entries; and
- a comparator comparing at least two configuration snapshots,
the configuration repository providing storage of configuration information of communications network entities in a realm of management of a network management solution, the comparator enabling configuration change management to be effected.

Thus, according to the invention, the advantages are derived from an efficient method of debugging communication network entity configuration problems.

The methods and system further enable easy migration of communication network entities to newer software/firmware releases, and provisioning replacement communication network equipment. Further advantages are derived from: a centralized tracking and storage of configuration information under version control, and the ability to compare versions of communication network entity configurations, reducing equipment downtime at reduced communication network management overheads.

In accordance with another aspect of the invention, the configuration change management system further includes a human-machine interface enabling an operator to interact with version-controlled configuration information and in particular to perform operations on configuration snapshots.

In accordance with a further aspect of the invention a method of effecting configuration change management is provided. The method includes steps of: retrieving at least two configuration snapshots; selecting at least one Command Line Interface (CLI) command from one of the at least two configuration snapshots; and issuing the at least one selected CLI command to a selected communication network entity to effect a configuration change. The at least one selected CLI command is issued to the selected communication network entity to restore the configuration thereof to a previous configuration.

The features and advantages of the invention will become more apparent from the following detailed description of the preferred embodiment with reference to the attached diagrams wherein:
FIG. 1 is a schematic diagram showing data network elements implementing an exemplary connected communications network infrastructure;
FIG. 2 is a schematic diagram of an configuration change management system implemented in accordance with an exemplary embodiment of the invention;
FIG. 3 is a schematic diagram showing a configuration repository roster specifying configuration command snapshot identification information in accordance with a generic exemplary implementation of the invention; and
FIG. 4 is a schematic diagram showing an exemplary arrangement of widgets defining a generic human-machine interface for effecting configuration change management in accordance with an exemplary embodiment of the invention.

It will be noted that in the attached diagrams like features bear similar labels.

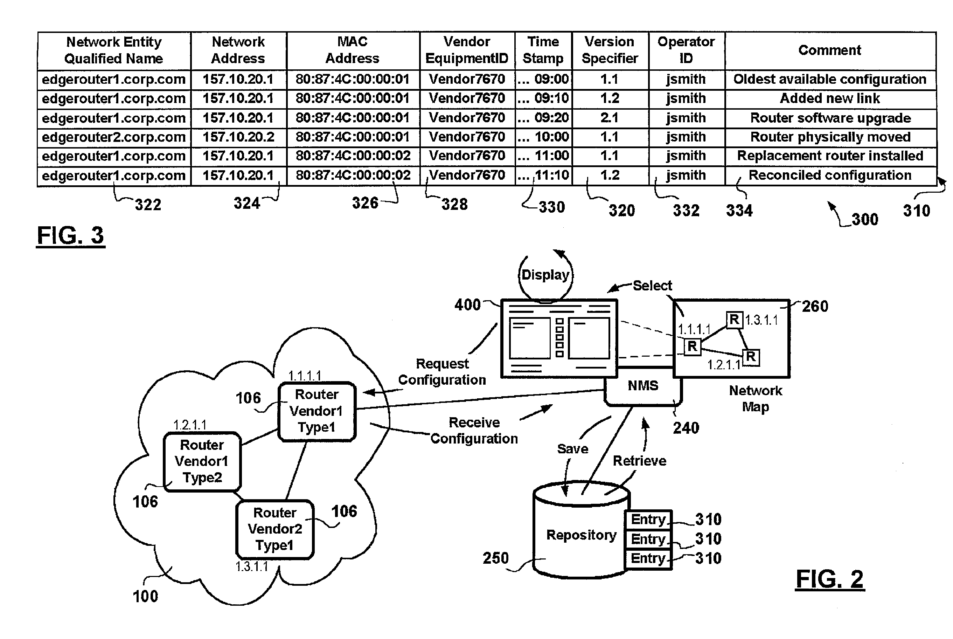

In accordance with a typical network provisioning scenario schematically shown in FIG.2, the communication network 100 includes router communication network entities 106 and a Network Management System (NMS) 240. Associated with the NMS 240 are various network management information repositories for storing network management information pertaining to communication network entities in a realm of management of the NMS 240.

In accordance with an exemplary embodiment of the invention, a record is kept for each managed communication network entity deployed, regardless of vendor equipment type, specifying a Command Line Interface (CLI) command or a CLI command sequence to be used in requesting and obtaining a configuration command snapshot from a corresponding vendor equipment type communications network entity. For certainty, each configuration command snapshot obtained, includes an exhaustive set of CLI commands otherwise needed to be input, via a CLI interface, to restore the configuration of the communications network entity to the same configuration as that present at the time the configuration command snapshot was requested.

In accordance with an exemplary embodiment of the invention, a configuration repository 250 is also provided. The configuration repository 250 is typically associated with the configuration change management system typically associated with the NMS 240. The configuration repository 250 provides consolidated storage of configuration command snapshots for managed communication network entities in the realm of management of the NMS 240. It is understood that network management may be performed in a decentralized fashion in which multiple NMS 240 cooperate to effect network management and sharing access to a single configuration repository 250 without limiting the invention. It is also understood that the configuration repository 250 may be implemented using central or distributed storage systems and techniques without limiting the invention thereto.

Typically the NMS 240 is adapted to display connectivity information regarding communication network entities in the realm of management thereof including providing what are know in the art as network maps 260. Network maps include schematic diagrams of interconnected iconical representations of communication network entities. Making reference to the connected manageable communications network entities schematically shown in FIG. 1, there are: Open Systems Interconnect (OSI) Layer 1 manageable communication network entities such as communication ports 108, interface cards 124, etc.; OSI layer 2 manageable communication network entities such as interface cards 124, switching nodes 112, etc.; and OSI Layer 3 manageable communications network entities such as (virtual) routers 106, bridges 106, etc.; all of which may be displayed in corresponding network maps 260. The invention is not limited to the above mentioned communication network entities or the OSI layer associations thereof. The invention concerns configuration management issues for any manageable communication network entity, whether physical or logical, having a configuration retrievable as a configuration command snapshot. The network maps 260 provide for the selection of communication network entities on which to effect configuration change management.

Current configuration information can be retrieved from communications network entities in configuration command snapshots and stored in the configuration repository 250 in corresponding configuration repository entries for backup, future reference, and furthermore to enable configuration comparisons. FIG. 3 is representative of a configuration command snapshot roster 300 each row corresponding to a repository entry 310.

In accordance with the exemplary embodiment of the invention, each configuration command snapshot obtained from a corresponding field-installed managed communication network entity, is stored in a repository entry 310 along with further identifying information. Preferably the identifying information includes configuration command snapshot version specifiers. A variety of version specifier formats may be used without limiting the invention. Means to manage retrieved configuration command snapshots and versioning control thereof is not known in the prior art. Shown in FIG. 3 are version specifier 320 having a numbered "major.minor" format.

The version specifier 320 is associated with other communications network entity identifiers between which: a fully qualified name 322, a network address 324, a physical access address such as a Media Access Control (MAC) address 326, a vendor equipment identifier 328, etc. The version specifier may further have associated therewith: a time stamp 330 related to the date and time at which the configuration command snapshot was obtained, an operator identifier 332, a comment 334, etc.

In accordance with the exemplary embodiment of the invention the configuration change management system generates the version specifier 320.

The version specifier 320 may be made dependent on the network address (324) of the subject managed communications network entity. For example, the network address 324 includes an Internet Protocol (IP) address when the communications network is an IP network, but the invention is not limited thereto. Network addresses are ascribed to communications network equipment in provisioning thereof.

The benefits of including the network address in the roster 300 enables the selection of configuration command snapshots from the repository to aid in the replacement of a managed communication network entity and reconfiguration of a replacement thereof subject to the same vendor specific/equipment type being installed at the same network location. The last two entries 310 shown in the roster 300 relate to the reconfiguration of a replacement router (106).

The version specifier may be dependent on physical interface device identifiers of the subject managed communication network entity. The physical interface device identifiers include MAC addressing but the invention is not limited thereto. Communication network entities having more than one physical interface device, such as a physical port 102, are typically associated with the lowest MAC address ascribed to all ports 102 thereof. Unique MAC addresses are ascribed during manufacturing of the vendor equipment whether port 102, interface card 124, switch 112, router 106, etc.; and determined as described above at instantiation of logical communications network entities such as virtual routers 106.

The benefits of including the physical interface identifiers in configuration command snapshot tracking enables the configuration to follow the corresponding communication network entity as the communication network entity moves in a realm of management. Such an example is a mobile communication network node.

Version dependencies based on fully qualified names such as SecureAccessRouter.corp.com, EdgeRouter1.provider.net, etc. benefits from enabling the configuration information to follow a networking function.

A configuration management scenario is presented in FIG. 3 wherein the first roster entry 310 corresponds to obtaining an initial configuration command snapshot from an edge router 106 communications network entity, the subsequent roster entry 310 corresponds to the configuration command snapshot of the same communications network entity having a newly activated link, and the subsequent roster entry 310 corresponds to the configuration command snapshot of the same communications network entity obtained following a software upgrade.

Note that the version specifier is reset when the physical communication network entity is moved to a new location - perhaps obtaining a different network address. A newly installed communication network entity, having the same vendor equipment identifier, may be configured to replace the moved communication network entity.

In accordance with the exemplary embodiment of the invention, the configuration management system also allows an operator to compare the current configuration of a communication network entity to a saved configuration command snapshot version thereof, and also to compare a saved configuration command snapshot to another saved configuration command snapshot. This feature enables the determination of configuration problems/discrepancies from differences between configuration command snapshots.

FIG. 4 is representative of a human-machine interface 400 associated with the exemplary configuration change management system presented. The human-machine interface 400 provides facilities for displaying configuration information to an operator for interaction therewith.

The configuration change management system may include a client user interface 400 and a server process. The server process may execute in a network management environment on a network management system 240 or on an independent platform so as not to burden the network management system 240. The server process controls connections to field-installed managed communications network entities and perhaps also controls access to the configuration repository 250.

In accordance with the exemplary embodiment of the invention, the configuration change management system is operable to perform tasks via the human-machine interface shown in FIG. 4 such as:
- retrieve the current configuration command snapshot from a field-installed communications network entity;
- retrieve a saved configuration command snapshot version from the configuration repository 250;
- display at least one configuration command snapshot to the operator;
- save the current configuration command snapshot retrieved from the managed field-installed communications network entity in the configuration repository under a new version; and
- save a displayed configuration command snapshot to an electronic file.

Various interactive elements known as widgets make up the human-machine interface displayed. As described above, a mode of specifying which communication network entity is to be made subject to configuration management, includes the interactive network map 260 via which the communication network entity may be selected. The human-machine interface 400 provides an editable field 402 which is populated with a communication network entity identifier. Having specified a communications network entity identifier, the operator may either interact with a "Get Configuration" button 404 or a "Get Repository Entry" button 406.

Activating the Get Configuration button 404, the configuration change management system performs the necessary steps to request and obtain a current configuration command snapshot from the specified configuration network entity.

Exemplary steps, shown in FIG. 2, performed in obtaining a current configuration command snapshot from a communication network entity may include:
- the communications network entity is selected via a network map 260 or identified by specifying identifying information regarding the communications network entity 106;
- the configuration change management system (server process) makes use of necessary vendor dependent CLI command(s) to request current configuration information from the selected communication network entity 106;
- the CLI command(s) is(are) sent to the target communications network entity 106;
- the target communications network entity 106 replies with the requested configuration command snapshot having a vendor dependent format;
- the configuration change management (client) user interface 400 displays the requested configuration command snapshot to the operator; and
- the operator may decide to retain the configuration command snapshot, in which case the configuration change management system saves the configuration command snapshot in the configuration repository 250 with an appropriate version description identifier subsequent to the operator interacting with a "Save Configuration Information to Repository" button 408. Alternatively, by interacting with a "Save Configuration Information to File" button 410 the configuration command snapshot may be saved to a file.

Care must be exercised in retrieving configuration command snapshots as the act represents an execution overhead for the target communication network entity and a transport overhead in the communications network.

In accordance with an implementation of the exemplary embodiment of the invention, timed backups of configuration command snapshots may be obtained at regular time intervals from corresponding communications network entities 106 and stored in the repository 250 providing a configuration revision history. In order not to burden the repository 250 with a large numbers of historical configuration revision history entries, revision history storage limits can be imposed such that, once a revision history limit is reached, subsequent configuration command snapshots overwrite the oldest entry. In order to track as many configuration changes as possible, timed backups may be automatically compared with the latest configuration command snapshot stored and not saved, if the configuration has not changed.

Activating the Get Repository Entry button 406, the configuration change management system accesses the configuration repository 250 and displays a configuration command snapshot roster 300 (shown in FIG. 3) showing the configuration change history of the identified communication network entity. The operator may further interact with the roster 300 to select a particular configuration command snapshot. Optionally, if a version identifier field 412 is populated, a corresponding configuration command snapshot is retrieved directly. A number of configuration command snapshots may be retrieved and displayed concurrently to the operator.

In accordance with the exemplary embodiment of the invention, the configuration change management system is further operable to:
- perform a comparison between configuration command snapshots;
- display the configuration command differences (deltas) to the operator; and
- enable the operator to interact with displayed configuration command differences (deltas).

Performing a comparison between configuration command snapshots includes retrieving at least two configuration command snapshots, whether stored or currently retrieved, and activating a comparison function via a "Compare" button 420.

In interacting with the displayed configuration command differences (deltas) the human-machine interface 400 provides, via iconical interactive elements shown in FIG. 4, for:
- identification of a next/previous configuration command difference 422 as configuration command snapshots can be quite lengthy, hotkeys may be provided for fast and easy interaction with the human-machine interface 400 to perform this task;
- selecting 424 configuration command differences;
- editing, copying, cutting, pasting configuration command differences;
- including/excluding 426 command differences across the compared configuration command snapshots; and
- issuing 428 selected configuration command differences for execution to an associated field-installed communications network entity 106.

Care must be exercised in editing a configuration command snapshot not to introduce errors. Saving an edited configuration command snapshot should be limited to configuration command snapshots successfully issued 428 and executed on the corresponding target communications network entity 106.

In summary, a configuration change management system is provided which includes software and hardware components operable in a network management context. The configuration change management system provides the display of, and version-controlled storage of, configuration information of a variety of vendor-specific communications network entity types interconnected in a multi-vendor communications network deployment. The configuration change management system further includes a configuration change management server component (server process), which executes in the network management context. The change management server component provides intermediary and control functions between the configuration repository 250, human-machine interface 400, and optionally network map displays in effecting configuration change management. The hardware components of the configuration change management system include a configuration repository 250 for storing configuration information in repository entries 310 under version control. The configuration repository entries 310 are populated with configuration command snapshots obtained from field-installed communications equipment. The human-machine interface 400 is used in interacting with configuration command snapshots to effect configuration change management.

Other configuration change management operations are provided such as: displaying a previously saved configuration command snapshot, comparing two previously saved configuration command snapshots, comparing a previous configuration command snapshot with a current configuration command snapshot retrieved from a field-installed communications network entity, and configuring a communications network entity in accordance with a previously saved configuration. These operations are useful in debugging configuration related network failures in managing communications networks, migrating a communications network entity to a new software release, replacing a communications network entity with a new communications network entity, etc.

The solution presented enables management of communications network entity configurations, and detection of configuration changes, for multi-vendor communication network entities. These capabilities are important to communication network operators as a more diverse communications network infrastructure management is possible with less investment in network management equipment and less operator training, thereby reducing the associated operating costs, and reducing failure recovery response times.

The embodiments presented are exemplary only and persons skilled in the art would appreciate that variations to the above described embodiments may be made without departing from the spirit of the invention. The scope of the invention is solely defined by the appended claims.

## Claims

1. Configuration management system comprising:
**a.** means for receiving configuration information from at least one communications network entity;
**b.** a configuration repository for storing version controlled snapshots of configuration information in configuration repository entries; and
**c.** a comparator comparing at least two configuration snapshots
the configuration repository providing storage of configuration information of communications network entities in a realm of management of a network management solution, the comparator enabling configuration change management to be effected.

2. Configuration management system as claimed in claim 1, further comprising a store for retrievably storing at least one Command Line Interface (CLI) command specification for a CLI command sequence used in requesting a configuration snapshot from a corresponding vendor specific communications network entity.

3. Configuration management system as claimed in claim 1 or claim 2, wherein each repository entry holds a version controlled configuration command snapshot.

4. Configuration management system as claimed in any one of claims 1 to 3, wherein each repository entry further specifies a configuration snapshot version identifier and at least one of: a communications network entity fully qualified name, a communications network entity network address, a communications network entity physical address, a vendor specific equipment identifier.

5. Configuration management system as claimed in claim 4, wherein each repository entry further specifies a time stamp holding a time specification representative of the time at which the configuration command snapshot was generated.

6. Configuration management system as claimed in any one of claims 1 to 5, further comprising a human-machine interface enabling an operator to interact with the version controlled configuration information.

7. Configuration management system as claimed in claim 6, wherein the human-machine interface is further operable to display a representation of at least one portion of a communications network comprising at least one managed communications network entity.

8. Configuration management system as claimed in claim 6 or claim 7, wherein the human-machine interface is further operable to display Open Systems Interconnection (OSI) Layer 1 communications network entities.

9. Configuration management system as claimed in any one of claims 6 to 8, wherein the human-machine interface is further operable to display Open Systems Interconnection (OSI) Layer 2 communications network entities.

10. Configuration management system as claimed in any one of claims 6 to 9, wherein the human-machine interface is further operable to display Open Systems Interconnection (OSI) Layer 3 communications network entities.

11. Configuration management system as claimed in any one of claims 6 to 10, the human-machine interface operable to select the at least one managed communications network entity creating a network management context in which to effect configuration change management.

12. Configuration management system as claimed in any one of claims 6 to 11, wherein the human-machine interface further includes:
**a.** interactive elements for retrieving at least two configuration snapshots pertaining to at least one communications network entity;
**b.** interactive display elements operable to display differences between at least two configuration snapshots.

13. Configuration management system as claimed in claim 12, wherein the human-machine interface further includes interactive elements operable to perform at least one operation on displayed differences from: edit, copy, paste, include, exclude, delete, save to file, issue for execution on a selected communications network entity, select next difference, and select previous difference.

14. Method of effecting configuration change management comprising the steps of:
**a.** retrieving at least two configurations command snapshots;
**b.** selecting at least one Command Line Interface (CLI) command from one of the at least two configuration command snapshots; and
**c.** issuing the at least one selected CLI command to a selected communications network entity to effect a configuration change
the at least one selected CLI command being issued to the selected communications network entity to restore the configuration thereof to a previous configuration.

15. Method of effecting configuration change management as claimed in claim 14, wherein retrieving the at least two configuration snapshots, the method further comprises a step of retrieving a configuration command snapshot from a one of: a configuration repository entry of a configuration repository storing version controlled configuration information, and a field-installed communications network entity.

16. Method of effecting configuration change management as claimed in claim 14 or claim 15, wherein prior to retrieving the at least two configuration snapshots, the method further comprises steps of:
**a.** issuing at least one CLI command to a managed field-installed communications network entity requesting a configuration command snapshot; and
**b.** storing the received configuration command snapshot in a configuration repository entity of a configuration repository subject to version control
successive received configuration command snapshots, having successive corresponding version specifiers, are stored in the configuration repository.

17. Method of effecting configuration change management as claimed in claim 16, wherein prior issuing at least one CLI command to a field-installed communications network entity requesting a configuration command snapshot, the method further comprises a step of: selecting the managed field-installed communications network entity from a network map representative of a realm of management of a network management solution.

18. Method of effecting configuration change management as claimed in claim 16 or claim 17, wherein prior issuing at least one CLI command to a field-installed communications network entity requesting a configuration command snapshot, the method further comprises a step of: specifying a communication network entity identifier corresponding to the managed field-installed communications network entity from: a communication network entity fully qualified name, a communications network entity network address, and a communications network entity physical address.

19. Method of effecting configuration change management as claimed in any one of claims 14 to 18, wherein prior to selecting at least one Command Line Interface (CLI) command from one of the at least two configuration command snapshots, the method further comprises a step of: comparing the at least two configuration command snapshots to determine differences therebetween.

20. Method of effecting configuration change management as claimed in claim 19, the method further comprises a step of: interacting with determined configuration command differences to perform at least one operation on displayed differences from: editing, copying, pasting, including, excluding, deleting, saving to file, issuing for execution on a selected communications network entity, selecting a next difference, and selecting a previous difference.
